# EUROPEAN PATENT APPLICATION

(11) **EP 4 557 172 A2**
(43) Date of publication of application: **21.05.2025**
(21) Application number: 25167733.2
(22) Date of filing: 01.11.2021
(51) Int. Cl.: G06N 3/065

(54) **DISTRIBUTED MULTI-COMPONENT SYNAPTIC COMPUTATIONAL STRUCTURE**

(30) Priority: 30.10.2020 US 202063107498 P
(62) Divisional of application: 21805450.0
(71) Applicant: Innatera Nanosystems B.V., 2288 GK Rijswijk (NL)
(72) Inventor: HETTEMA, Bart, 2624 CP Delft (NL); ZJAJO, Amir, 2511 GK The Hague (NL)
(74) Representative: Hoyng Rokh Monegier B.V.

(57) **Abstract**

The current invention discloses a spiking neural network (100) comprising a plurality of presynaptic integrators (209), a plurality of weight application elements (210), and a plurality of output neurons (220). Each of the plurality of presynaptic integrators (213) is adapted to receive a presynaptic pulse signal (204) which incites accumulation of charge within the presynaptic integrator, and generate a synaptic input signal (214) based on the accumulated charge such that the synaptic input signal has a pre-determined temporal dynamic. A first group of weight application elements (211) of the plurality of weight application elements (210) is connected to receive the synaptic input signal (214) from a first one of the plurality of presynaptic integrators (213). Each weight application element (211) of the first group of weight application elements is adapted to apply a weight value to the synaptic input signal (214) to generate a synaptic output current (215), wherein the strength of the synaptic output current is a function of the applied weight value. Each of the plurality of output neurons (222) is connected to receive a synaptic output current (214) from a second group of weight application elements of the plurality of weight application elements, and generate a spatiotemporal spike train output signal (223) based on the received one or more synaptic output currents.

## Description

### TECHNICAL FIELD

The present invention relates to automatic signal recognition techniques, and more particularly, to a system and method for distributed multi-component synaptic computational structures that allows area-optimized and energy-efficient processing mechanisms in networks. In particular the computational structures are spiking neural networks.

### BACKGROUND

Brain-inspired neuromorphic spiking neural network (SNN) emulators form distributed, parallel, and event-driven systems offering capabilities such as adaptation, self-organization, and learning. These emulators implement several concepts, e.g. activity-dependent short-term and long-term plasticity, which are experimentally demonstrated. See C. Mead, "Neuromorphic electronic systems," Proceedings of IEEE, vol. 78, no. 10, pp. 1629-1636, Oct. 1990.

Input information is encoded by patterns of activity occurring over populations of neurons, and the synapses (which each form a connection from one neuron to a subsequent neuron) can adapt their function depending on the pulses (e.g. in the form of a spatio-temporal spike train) they receive, providing signal transmission energy-efficiency, and flexibility to store and recall information. See R. Douglas, M. Mahowald, C. Mead, "Neuromorphic analogue VLSI," Annual Reviews Neuroscience, vol. 18, pp. 255-281, 1995.

The synapses perform a dual function, i.e. the synapses implement memory storage capabilities in addition to their functioning as complex nonlinear operators, which perform distributed computation. Due to the separation of processing elements and memory, traditional, von Neumann-based computing systems are not optimized for computational tasks involving large amounts of high-dimensional data, e.g. image processing, object recognition, probabilistic inference, or speech recognition; these computational tasks can be efficiently completed with powerful, and yet conceptually simple and highly parallel methods, such as SNNs, where memory and processing elements are co-localized. Neuromorphic systems are driven directly by the input data, i.e. synapses receive spikes and neurons generate spikes, respectively, at the rate of the incoming data. Consequently, only when the circuit is processing data, dynamic power consumption occurs. For applications where the spatial-temporal signal activity is sparse, most neurons are non-active at each particular moment, leading to a minimal power consumption.

Neuromorphic computational elements, i.e. neurons and synapses, display a wide range of spiking behaviours, typically represented as dynamical systems of various complexity, representing various trade-offs between the biophysical accuracy and computational capabilities. Several distinctive, hardware implementations of biologically-plausible, biologically-inspired and integrate-and-fire neuron models incorporate membrane dynamics (modelling charge leakage across the membrane); ion channel dynamics (governing ions flow); axonal models (with associated delay components); and dendritic models (modelling influence of the pre- and post-synaptic neurons). See C.D. Schuman, et al., "A survey of neuromorphic computing and neural networks in hardware," arXiv.1705.06963, p. 88, 2017.

Hardware implementations of the synaptic models, which are repurposed for the advancement and employment of new materials, mainly focus on optimizing the synapse implementation. More complex synapse models include a plasticity mechanism (e.g. both short-term and long-term potentiation and depression, see S.-C. Liu, "Analog VLSI circuits for short-term dynamic synapses," EURASIP Journal on Applied Signal Processing, vol. 7, pp. 620-628, 2003), or for more biologically-inspired neuromorphic networks include the chemical interactions of synapses (see F.L. Maldonado Huayaney, et al., "Implementation of multi-factor synaptic plasticity with calcium-based dynamics," IEEE Transactions on Circuits and Systems-I, vol. 63, no. 12, pp. 2189-2199, 2016). Synapses are also utilized as a homeostasis mechanisms for stabilization of the network activity (see S.-C. Liu, B.A. Minch, "Silicon synaptic adaptation mechanisms for homeostasis and contrast gain control," IEEE Transactions on Neural Networks, vol. 13, no. 6, pp. 1497-1503, 2002).

Modern deep learning architectures typically consist of multiple layers, where each layer consists of a vector matrix multiplication implemented by a synaptic matrix, the result of which is used as input for a specific non-linear activation function (e.g. sigmoid function, rectified linear unit (ReLU) activation function, or an activation function based on membrane potential dynamics) at a neuron. The activation function at the neuron is also called the neuron activation function. The neurosynaptic array adopts a hybrid analog-digital signal representation, i.e. the trains of pulses/spikes transmit analog information in the timing of the events, which are converted back into analog signals at the inputs of the synaptic matrix. Analog crossbar arrays inherently realize dot-product operations (which form an essential operation in dense vector matrix multiplication). In analog domain, by applying a vector of voltage signals to the rows of a synaptic crossbar, multiplication by each synapse (weight w) is performed by the Kirchhoff's Current Law (KCL) rule, and the current is summed across each column. i.e. the outputs of the synapses are usually in the current domain, since signal summing in the current domain is simply wiring all outputs together. This (post-) synaptic current denotes the multiplication result, while the signal summing as well as the non-linear functionality are provided by neuron dynamics represented by the neuron activation function.

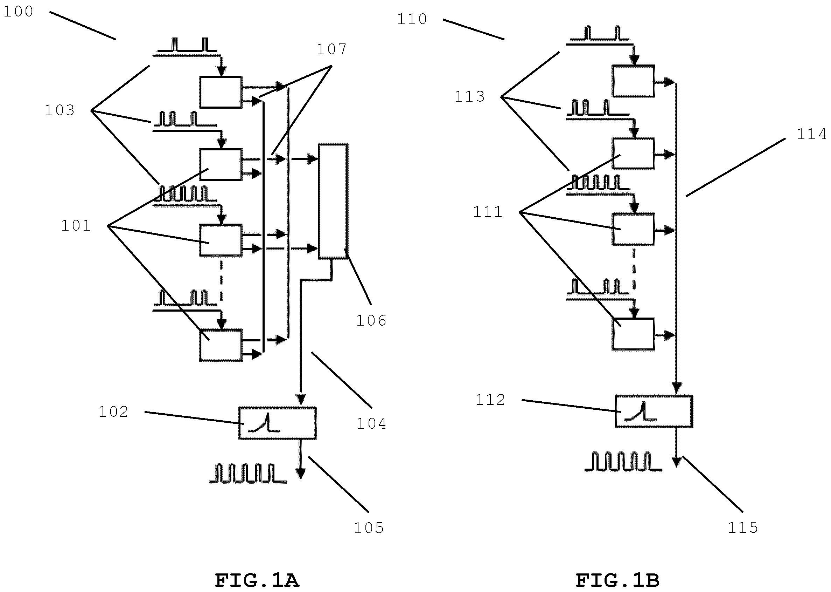

In general, two distinctive approaches are utilized to derive a weighted input, as exemplified by FIG. 1A and FIG. 1B respectively.

FIG. 1A discloses a known first approach where all synapses have two symmetric output currents, which are first separately summed. Consequently, the difference of the two sums is then the weighted input. FIG. 1A indeed shows an example of a portion of a prior art spiking neural network 100, including synaptic input signals 103, m synaptic elements 101, current mirror 106, synaptic output currents 107, weighted synaptic output 104, an output neuron 102 and a neuron output signal 105. The synaptic elements 101 are configured to receive synaptic input signals 100, the synaptic input signals being spatio-temporal spike trains. The synaptic elements 101 convert an input spike in the synaptic input signal 103 to a current, in order to then each apply a weight *w*₁₁, *w*₂₁, ..., *w*_{*m*1} (here the first index indicates the row of the synaptic matrix, while the second index indicates the column of the synapse matrix) to generate two synaptic symmetric output currents 107. The difference of these currents is calculated by the current mirror 106 to generate a final weighted synaptic output 104. The output neuron 102 then generates a neuron output signal 105 based on the weighted synaptic output 104. It should be noted that each of the synaptic elements 101 is configured to perform both the integration of the synaptic input signals 100 to generate a current, and the subsequent application of a weight to this current to generate synaptic output currents 107.

FIG. 1B discloses a known second approach, where all synapses have one bipolar (positive/negative, excitatory/inhibitory) output current, and the weighted input is then the sum of these bipolar output currents. FIG. 1B indeed shows another example of a portion of a prior art spiking neural network 110, including synaptic input signals 113, synaptic elements 111, synaptic output currents 114, an output neuron 112 and a neuron output signal 115. Like in the previous example, the synaptic elements 111 perform the functions of both integration of synaptic input signals and subsequent weight application with weight *w*₁₁, *w*₂₁, ... , *w*_{*m*1}.However, in this method the synaptic elements 111 are configured to generate a positive or negative output current 104, corresponding to an excitatory or inhibitory signal, such that no subtraction of signals is necessary to generate a correct weighted output.

Since each synapse usually includes a current mirror, each synapse requires a larger chip area. However, the wiring in this example is simplified as all building blocks are identical, i.e. the current mirror(s) do not need to be re-designed when implementing a neuron with a higher or lower dimensional input vector, i.e. when the number of synaptic elements m is changed.

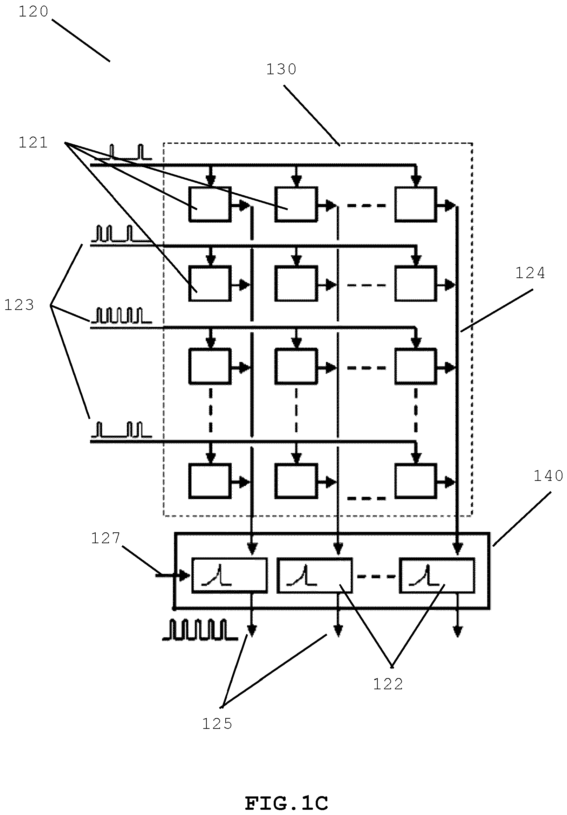

FIG 1C discloses a known neurosynaptic array consisting of a neural network matrix that connects *m* × *n* programmable synapses to *n* neurons. Neurosynaptic computational elements are able to generate complex spatio-temporal dynamics, extendable towards specific features of the target signal processing function. The neuron spiking properties are controlled through specific parameter sets. Indeed, FIG. 1C shows a prior art neurosynaptic array 120 forming part of a spiking neural network, comprising a neural network matrix 130 connecting multiple groups of programmable synaptic elements 121 to an array 140 of *n* output neurons 122 comprising neurons *N*₁, *N*₂, ..., *Nₙ*, wherein the synaptic elements 121 receive synaptic input signals 123 to generate synaptic output currents 124, and wherein the output neurons 122 are configured to generate neuron output signals 125. While each of the neurons 122 is connected to a different column of synaptic elements 121, the synaptic input signal 123 received by each row of synaptic elements 213 is the same, though different weight values *w*_{*i*1}, *w*_{*i*2}, ... , *wᵢₙ* may be applied by different synaptic elements 211 in the same row with row index *i*. Finally, the neurons are configurable by one or more neuron control signals 127. These neuron control signals 127 can control the neuron dynamics represented by the neuron activation function, for example by changing a parameter of the neuron activation function. Again, each of the synaptic elements 121 are configured to perform both the integration of synaptic input signal and subsequent weight application functions.

In a fully connected network, synaptic integration capacitance is the largest contributor to the total area of the array. Capacitors take up a lot of space and consume relatively big amounts of energy. In prior art hardware implementations of spiking neural networks, capacitors are required for synaptic integration in the synaptic elements. Consequently, a prior art spiking neural network comprising many layers of synapses and neurons is not optimized with respect to area and energy use. Accordingly, a need exists in the industry for a more efficient spiking neural network.

### SUMMARY

In this patent application, to enable area- and power-efficient design, we report a novel distributed multi-component synaptic structure, where each of the distributed components implements distinctive computational characteristics and can be optimized towards specifics of the predefined signal processing function.

According to a first aspect of the disclosure, a spiking neural network 100 comprising a plurality of presynaptic integrators 209, a plurality of weight application elements 210, and a plurality of output neurons 220 is disclosed. Each of the plurality of presynaptic integrators 213 is adapted to receive a presynaptic pulse signal 204 which incites accumulation of charge within the presynaptic integrator, and generate a synaptic input signal 214 based on the accumulated charge such that the synaptic input signal has a pre-determined temporal dynamic. A first group of weight application elements 211 of the plurality of weight application elements 210 is connected to receive the synaptic input signal 214 from a first one of the plurality of presynaptic integrators 213. Each weight application element 211 of the first group of weight application elements is adapted to apply a weight value to the synaptic input signal 214 to generate a synaptic output current 215, wherein the strength of the synaptic output current is a function of the applied weight value. Each of the plurality of output neurons 222 is connected to receive a synaptic output current 214 from a second group of weight application elements of the plurality of weight application elements, and generate a spatio-temporal spike train output signal 223 based on the received one or more synaptic output currents.

For area-optimized design (and subsequently energy-efficient design), instead of using one circuit to reproduce synaptic dynamics, the current invention thus reproduces synaptic dynamics with two dedicated circuits, namely the presynaptic integrators and the weight application element. Each implementing a well-defined function, the first circuit performing pulse (spike) integration, and the second circuit performing weight application. Consequently, only a single spike integrator (and thus a single capacitor, instead of a capacitor for each synapse) for every input signal is required. This thus results in an area-efficient design, where the pre-integration is shared per row of weight application elements 211. Furthermore, since only a single pre-integration instead of *n* pre-integrations now need to be performed, the invention provides for a more power-efficient implementation of the synaptic matrix.

According to an embodiment, each of the weight application elements comprises a weight application circuit comprising: a synaptic input receiver configured to receive the synaptic input signal from the presynaptic integrator and to generate a synaptic input current based on the synaptic input signal; a weight storage element configured to store the weight value; a modification element configured to apply the weight value stored in the weight storage element to the synaptic input current to generate the synaptic output current; wherein the weight value is preferably stored in digital form and transformed to an analog domain through a current-steering digital-to-analog converter, wherein the current-steering digital-to-analog converter is preferably based on an R-2R architecture, and wherein current-steering digital-to-analog converter preferably applies a predetermined factor to attenuate the synaptic input current, and generates the synaptic output current based on the attenuated synaptic input current.

In an embodiment the weight value stored in the weight storage element is adjustable, preferably wherein the weight value stored in the weight storage element is adjusted based on a learning rule.

In an embodiment the network further comprises a row spike decoder configured to supply the presynaptic pulse signal on the basis of a presynaptic input spike such that the presynaptic pulse signal is allocated to the presynaptic integrator on the basis of the configuration of the spiking neural network.

In an embodiment the spiking neural network comprises input neurons which generate the presynaptic pulse signal, and wherein the presynaptic integrator multiplexes time spikes originating from different input neurons.

In an embodiment the pre-determined temporal dynamic of the synaptic input signal that the presynaptic integrator generates is an AMPA, NMDA, GABA_{A}, or GABA_{B} temporal dynamic.

In an embodiment, the presynaptic integrator generates a tunable gain independent from a tunable time constant, wherein the time constant determines a leakage current which decumulates the accumulated charge within the presynaptic integrator and characterizes the temporal dynamic of the synaptic input signal of the presynaptic integrator.

In an embodiment, the presynaptic integrator is configurable by a control signal, preferably wherein the control signal controls the temporal shape of the synaptic input signal.

In an embodiment, the output neurons are controlled by a neuron control signal such as to control the neuron dynamics.

In an embodiment, the spiking neural network comprises a plurality of first groups of weight application elements, wherein each one of the weight application elements in each first group of weight application elements is connected to receive the same synaptic input signal from a respective presynaptic integrator, and wherein each first group of weight application elements is connected to receive a synaptic input signal from a different one of the plurality of presynaptic integrators.

In an embodiment, the spiking neural network comprises a plurality of input neurons, wherein a respective one of the input neurons is connected to provide a presynaptic pulse signal to a respective one of the presynaptic integrators for providing a synaptic input signal for a respective first group of weight application elements.

In an embodiment, the spiking neural network comprises a plurality of second groups of weight application elements, wherein each second group of weight application elements is connected to provide synaptic output signals to a different one of the plurality of output neurons.

In an embodiment, the spiking neural network displays a range of pattern activity in use, comprising full synchrony, cluster or asynchronous states, heterogeneities in the input patterns, neurosynaptic elements spatio-temporal dynamics, non-linear spiking behaviour and/or frequency adaptability.

According to a second aspect of the disclosure, a presynaptic integration circuit configured to generate a synaptic input current for input to a plurality of weight application elements is disclosed. The presynaptic integration circuit comprising: an input element configured to receive a presynaptic pulse signal, preferably a presynaptic pulse voltage, preferably wherein the presynaptic pulse signal is a spatio-temporal spike train; a capacitor configured to accumulate charge in response to the presynaptic pulse signal; a leakage element configured to discharge at least a portion of the charge accumulated by the capacitor; and an output element configured to generate the synaptic input signal based on the charge accumulated by the capacitor for supply to the plurality of weight application elements.

In an embodiment, the presynaptic integration circuit further comprises a control element adapted to control the temporal dynamic of the synaptic input signal, wherein the control element is configured to: receive a control signal, preferably a control voltage; regulate accumulation of charge by the capacitor based on the control signal; and regulate the maximum amplitude of the synaptic input signal by controlling the maximum charge on the capacitor.

According to a third aspect of the disclosure, a presynaptic integration circuit configured to generate a synaptic input signal for subsequent weight application is disclosed. The presynaptic integration circuit comprising: an input element configured to receive a presynaptic pulse signal, preferably a presynaptic pulse voltage, wherein the presynaptic pulse signal is a spatio-temporal spike train; a capacitor configured to accumulate charge based on a spike in the spatio-temporal spike train; a leakage element configured to discharge at least a portion of the charge accumulated by the capacitor; an output element configured to generate the synaptic input signal based on the charge accumulated by the capacitor; an output control element configured to control the generation of the synaptic input signal performed by the output element based on the presynaptic pulse signal, such that the generation of the synaptic input signal is controlled by the spatio-temporal spike train, preferably wherein the synaptic input signal is not generated during a spike of the spatio-temporal spike train; and a control element, configured to: receive a control signal, preferably a control voltage, regulate accumulation of charge by the capacitor such that the amount of charge accumulated by the capacitor is independent of a duration of a spike in the spatio-temporal spike train and the capacitance value of the capacitor, preferably manufacturing variation in the capacitor; and regulate the temporal shape and maximum amplitude of the synaptic input signal by controlling the maximum charge on the capacitor.

The amount of charge accumulated by the capacitor is independent of a duration of a spike in the spatio-temporal spike train and the capacitance value of the capacitor, thus the functioning and performance of the presynaptic integration circuit is independent on the variance in manufacturing of the capacitor.

In an embodiment, the output control element comprises a field-effect transistor and an inverter, the inverter configured to apply a gate-source voltage of the field effect transistor of the output control element based on the presynaptic input signal, preferably wherein the gate-source voltage is applied when the presynaptic input signal is not spiking, and wherein the synaptic input signal is generated by the drain-source current over the field-effect transistor of the output control element.

In an embodiment of the second or third aspect, the leakage element is controlled by a time constant, preferably wherein the time constant characterizes AMPA, NMDA, GABA_{A} or GABA_{B} temporal dynamics.

In an embodiment of the second or third aspect, the leakage element comprises a field-effect transistor, wherein the time constant is the gate-source voltage of the field-effect transistor of the leakage element, and wherein the capacitor is discharged by the drain-source current of the field-effect transistor of the leakage element.

In an embodiment of the second or third aspect, the input element comprises a field-effect transistor, wherein the presynaptic pulse signal is the gate-source voltage of the field-effect transistor of the input element, and wherein the drain-source current over the field-effect transistor of the input element charges up the capacitor.

In an embodiment of the second or third aspect, the output element comprises a field-effect transistor, wherein the charge accumulated by the capacitor generates the gate-source voltage of the field-effect transistor of the output element, and wherein the drain-source current over the field-effect transistor of the output element generates the synaptic input signal.

In an embodiment of the second or third aspect, the control element comprises a field-effect transistor, wherein the control signal is the gate-source voltage of the field-effect transistor of the control element, and wherein the capacitor is charged by the drain-source current over the field-effect transistor of the control element.

In an embodiment of the second or third aspect, the output element further comprises an output current mirror which is configured to generate the synaptic input signal in the voltage domain; or an output cascode current mirror which is configured to generate the synaptic input signal in the voltage domain, the resulting synaptic input signal comprising two voltage signals.

In an embodiment of the second or third aspect, the synaptic input signal decreases exponentially when the capacitor is being discharged.

According to a fourth aspect of the disclosure, a polarity selection circuit configured to replicate or invert a synaptic output current, is disclosed. The polarity selection circuit comprising: a polarity input element configured to receive the synaptic output current; a polarity selection terminal configured to select a sourcing or sinking current mirror on the basis of a polarity input signal; wherein the sourcing current mirror is configured to replicate the synaptic output current; and wherein the sinking current mirror is configured to invert the synaptic output current; a polarity output element which generates a polarity output current on the basis of the replicated or inverted synaptic output current.

According to an embodiment of the first aspect of the invention, each of the weight application elements further comprises a polarity selection element, the polarity selection element comprising the polarity selection circuit according to the fourth aspect of the invention, such that the synaptic output signal from the first aspect of the invention is used by the polarity selection circuit to generate the polarity output current, preferably wherein the input neuron receives the polarity output current and wherein the replicated synaptic output current corresponds to an excitatory synaptic output signal and the inverted synaptic output current corresponds to an inhibitory synaptic output signal.

In an embodiment of the first aspect, the presynaptic integrator comprises the presynaptic integration circuit according to the second or third aspect.

According to a fifth aspect of the disclosure, a method of presynaptic integration and weight application for a spiking neural network is disclosed. The spiking neural network comprising a plurality of presynaptic integrators 209, a plurality of weight application elements 210, and a plurality of output neurons 220. The method comprises: receiving, by each of the plurality of presynaptic integrators 213, a presynaptic pulse signal 204 which incites accumulation of charge with the presynaptic integrator; generating, by each of the plurality of presynaptic integrators 213, a synaptic input signal 214 based on the accumulated charge such that the synaptic input signal has a pre-determined temporal dynamic; receiving, by a first group of weight application elements 211 of the plurality of weight application elements 210, the synaptic input signal 214 from a first one of the plurality of presynaptic integrators 213; applying a weight value to the synaptic input signal 214 by each weight application element 211 of the first group of weight application elements to generate a synaptic output current 215, wherein the strength of the synaptic output current is a function of the applied weight value; and receiving, by each of the plurality of output neurons 222, a synaptic output current 214 from a second group of weight application elements of the plurality of weight application elements, and generating a spatio-temporal spike train output signal 223 based on the received one or more synaptic output currents.

In an embodiment, each of the weight application elements comprises a weight application circuit, adapted to: receiving the synaptic input signal from the presynaptic integrator and to generate a synaptic input current based on the synaptic input signal; storing the weight values; applying the stored weight value to the synaptic input current to generate the synaptic output current.

In an embodiment, the presynaptic integrator generates a tunable gain independent from a tunable time constant, wherein the time constant determines a leakage current which decumulates the accumulated charge within the presynaptic integrator and characterizes the temporal dynamic of the synaptic input signal of the presynaptic integrator.

In an embodiment, the spiking neural network comprises a plurality of first groups of weight application elements; wherein each one of the weight application elements in each first group of weight application elements is connected to receive the same synaptic input signal from a respective presynaptic integrator; and wherein each first group of weight application elements is connected to receive a synaptic input signal from a different one of the plurality of presynaptic integrators.

In an embodiment, the spiking neural network comprises a plurality of input neurons, wherein a respective one of the input neurons is connected to provide a presynaptic pulse signal to a respective one of the presynaptic integrators for providing a synaptic input signal for a respective first group of weight application elements.

According to a sixth aspect of the disclosure, a method of presynaptic integration for a spiking neural network is disclosed. The method comprising: providing a presynaptic integration circuit configured to generate a synaptic input current for input to a plurality of weight application elements; receiving a presynaptic pulse signal, preferably a presynaptic pulse voltage, preferably wherein the presynaptic pulse signal is a spatio-temporal spike train; accumulating charge in response to the presynaptic pulse signal; discharging at least a portion of the charge accumulated through a leakage element; and generating the synaptic input signal based on the charge accumulated for supply to the plurality of weight application elements.

According to a seventh aspect of the disclosure, a method of presynaptic integration for a spiking neural network is disclosed. The method comprising: providing a presynaptic integration circuit configured to generate a synaptic input signal for subsequent weight application; receiving a presynaptic pulse signal, preferably a presynaptic pulse voltage, wherein the presynaptic pulse signal is a spatio-temporal spike train; accumulating charge by a capacitor based on a spike in the spatio-temporal spike train; discharging at least a portion of the charge accumulated by the capacitor through a leakage element; generating the synaptic input signal based on the charge accumulated by the capacitor; controlling the generation of the synaptic input signal performed by the output element based on the presynaptic pulse signal, such that the generation of the synaptic input signal is controlled by the spatio-temporal spike train, preferably wherein the synaptic input signal is not generated during a spike of the spatio-temporal spike train; and providing a control element, configured to: receive a control signal, preferably a control voltage, regulate the accumulation of charge such that the amount of charge accumulated by the capacitor is independent of a duration of a spike in the spatio-temporal spike train and the capacitance value of the capacitor, preferably manufacturing variation in the capacitor; and regulate the temporal shape and maximum amplitude of the synaptic input signal by controlling the maximum charge on the capacitor.

According to a eighth aspect of the disclosure, a method for polarity selection is disclosed. The method comprising: providing polarity selection circuit configured to replicate or invert a synaptic output current; receiving the synaptic output current; selecting a sourcing or sinking current mirror on the basis of a polarity input signal; replicating the synaptic output current and/or inverting the synaptic output current; generating a polarity output current on the basis of the replicated or inverted synaptic output current.

According to a nineth aspect of the disclosure, a method of classifying input signals using the spiking neural network according to the first aspect is disclosed.

### BRIEF DESCRIPTION OF DRAWINGS

Embodiments will now be described, by way of example only, with reference to the accompanying schematic drawings in which corresponding reference symbols indicate corresponding parts, and in which:
FIGS. 1A-1C show examples of at least a part of prior art spiking neural networks;
FIG. 2 shows at least a part of a spiking neural network according to an exemplary embodiment;
FIG. 3 shows at least a part of a spiking neural network according to another exemplary embodiment;
FIG. 4A shows a presynaptic integration circuit according to an exemplary embodiment;
FIG. 4B shows a presynaptic integration circuit according to another exemplary embodiment;
FIG. 5A shows a weight application circuit according to an exemplary embodiment;
FIG. 5B shows a weight application circuit according to another exemplary embodiment;
FIG. 6 shows a polarity selection circuit according to an exemplary embodiment;
FIG. 7A shows a graph illustrating excitatory synaptic output current dynamics according to an exemplary embodiment;
FIG. 7B shows a graph illustrating spatio-temporal spike train dynamics according to an exemplary embodiment;
FIG. 7C shows a graph illustrating spatio-temporal spike train dynamics according to another exemplary embodiment.

The figures are meant for illustrative purposes only, and do not serve as restriction of the scope or the protection as laid down by the claims.

### DESCRIPTION OF EMBODIMENTS

Hereinafter, certain embodiments will be described in further detail. It should be appreciated, however, that these embodiments may not be construed as limiting the scope of protection for the present disclosure.

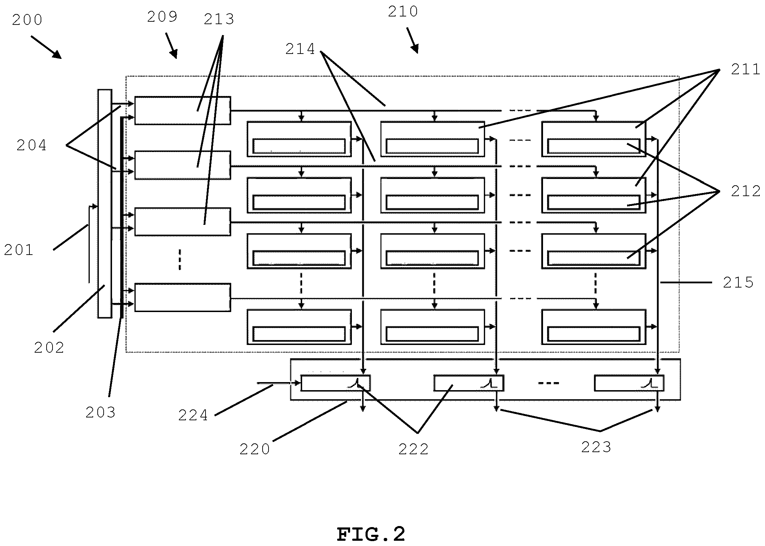

As mentioned above, in a fully connected network with *m* × *n* synapses, the capacitors used for synaptic integration is the largest contributor to the total area of the array. For area-optimized design (and subsequently energy-efficient design), instead of using one circuit to reproduce synaptic dynamics (as in FIG. 1A-C), the current invention reproduces synaptic dynamics with two dedicated circuits (FIG. 2), each implementing a well-defined function, the first circuit performing pulse (spike) integration, and the second circuit performing weight application. Consequently, only a single spike integrator (and thus a single capacitor, instead of n capacitors) for every input signal is required. This thus results in an area-efficient design, where the pre-integration is shared per row of weight application elements 211. Furthermore, since only a single pre-integration instead of n pre-integrations now need to be performed, the invention provides for a more power-efficient implementation of the synaptic matrix.

FIG. 2 shows a part of a spiking neural network 200 according to an exemplary embodiment, which may form a sub-network (or ensemble) within a larger neural network comprising a plurality of sub-networks, and may be implemented as a neuro-synaptic core. Fig. 2 shows output neurons 222, which are connected to weight application elements 211, which are connected to presynaptic integrators 213. Exemplary embodiments include at least one presynaptic integrator 213, a plurality 210 of weight application elements 211 and a plurality 220 of output neurons 222. In some embodiments, the spiking neural network 200 comprises several layers, such that the spatio-temporal spike train output signal 223 generated by the output neurons 222 may form the presynaptic signal 204 received by a presynaptic integrator 213 in a next layer, and such that the presynaptic pulse signal 204 received by a presynaptic integrator 213 may be generated by an input neuron, i.e. an output neuron 222 from a previous layer. In order to not clutter the image, only a small number of neurons 222, presynaptic integrators 213 and weight application elements 211 are shown, and only some have a reference numeral attached to them.

Synaptic dynamics are replicated by the presynaptic integrator 213 and the weight application elements 211. The presynaptic integrator 213, performs the function of presynaptic pulse (spike) integration, such that a presynaptic (fast) pulse signal 204 is translated into a (long-lasting) synaptic input signal 214. In some embodiments, the synaptic input signal 214 may be an exponentially decreasing spike, similar to a signal emitted by an AMPA-receptor. In some embodiments, the synaptic input signal 214 may be a synaptic input current. In some embodiments, the synaptic input signal 214 may be a synaptic input voltage. In some embodiments, the presynaptic integrator 213 is configurable by a control signal 203, preferably wherein the control signal 203 controls the temporal shape of the synaptic input signals 214 generated by the presynaptic integrator 213.

Each weight application element 211 performs the typical synaptic function, connecting input and output neurons and applying a weight value, stored in a corresponding weight storage element 212, to the synaptic input signal 214 to generate a synaptic output current 215. In particular, the applied weight value determines the strength of the synaptic output current 215. In some embodiments, the weight application element applies a factor ranging from zero to one to attenuate its synaptic input signal to generate a synaptic output current comprising a selected portion of the synaptic input signal. In some embodiments, the weight value stored by a weight storage element 212 is adjustable, preferably according to a learning rule.

The output neurons 222 are configured to receive at least one synaptic output current 215 from a weight application element 211 to generate a spatio-temporal spike train output signal based on the received one or more synaptic output currents. In some embodiments, the output neurons 222 are configurable by a neuron control signal 224. These neuron control signals 127 can e.g. control the neuron dynamics represented by the neuron activation function, for example by changing a parameter of the neuron activation function.

In an alternative embodiment, the spiking neural network further comprises a row spike decoder 202, configured to decode and allocate the presynaptic pulse signals 204 to the corresponding presynaptic integrators 213, based on a presynaptic input spike 201. Which presynaptic pulse signals to send to which presynaptic integrator 213 depends of the configuration of the spiking neural network. Decoding the presynaptic input spike 201 encompasses.

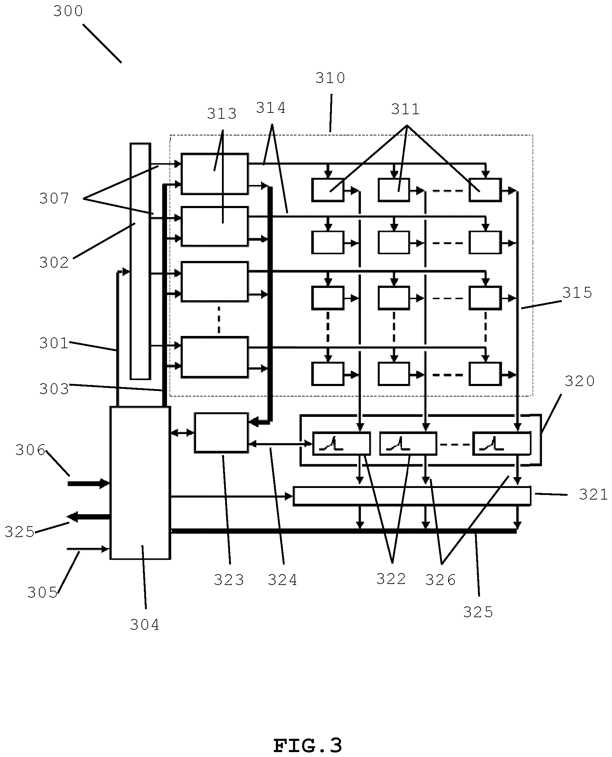

FIG. 3 shows a another example of a part of a spiking neural network 300 according to another exemplary embodiment, which may form a sub-network (or ensemble) within a larger neural network comprising a plurality of sub-networks, and may be implemented as a neuro-synaptic core. The output neurons 322 are connected to weight application elements 311, which are connected to presynaptic integrators 313. Exemplary embodiments include at least one presynaptic integrator 313, a plurality 310 of weight application elements 311 and a plurality 320 of output neurons 322. In some embodiments, the spiking neural network 300 comprises several layers, such that the spatio-temporal spike train output signal 326 generated by the output neurons 322 may form the presynaptic signal 204 received by a presynaptic integrator 213 in a next layer, and such that the presynaptic pulse signal 307 received by a presynaptic integrator 313 may be generated by an input neuron, i.e. an output neuron 322 from a previous layer. In order to not clutter the image, only a small number of neurons 322, presynaptic integrators 313 and weight application elements 311 are shown, and only some have a reference numeral attached to them.

This embodiment further comprises a neurosynaptic core control element 304, a neuron control element 323, a neuron decoder element 321 and a row spike decoder 302 analogous to the row spike decoder 202 from Fig. 2, such that a the row spike decoder 302 decodes and allocates presynaptic pulse signals 307 to presynaptic integrators 313 based on a presynaptic input spike 301.

A plurality of neurosynaptic cores arranged in an array of cores arranges a high-level architecture for learning systems. Each core comprises a network of neurons implemented in hardware, the neurons interconnected by synaptic elements. A single core may implement a complete spiking neural network, or a portion of a spiking neural network forming a separate sub-network. In this way, a large spiking neural network can be partitioned into a number of smaller sub-networks, each sub-network being implemented in one of the cores of the array. In one embodiment, the cores may implement a spiking neural network with associated input data ports, output ports, and/or control and configuration interface, for example each core implementing one or more sub-networks including the arrangement of Fig. 2 or 3.

By partitioning large spiking neural networks into smaller sub-networks and implementing each of the sub-networks on one or more cores, each with their own requisite circuitry, some of the non-idealities of circuits operating at smaller process geometries, and lower operating currents are mitigated, especially for large arrays. The core-based implementation approach thus reduces the impact of physical non-idealities.

A sub-network, or ensemble of neurons that form a co-operative group can for example form a classifier, an ensemble of classifiers, groups of neurons that handle data conversion, feature encoding or solely the classification, et cetera.

In such a regime, a large network of ensembles is partitioned and mapped onto an array of cores, each of which contains a programmable network of spiking neurons. Each core consequently implements a single ensemble, multiple small ensembles (in relation to the number of neurons and synapses in the core), or in the case of large ensembles, only a part of a single ensemble, with other parts implemented on other cores of the array. The modalities of how ensembles are partitioned and mapped to cores is determined by a mapping methodology. The mapping methodology can comprise a constraint-driven partitioning. The constraint can be a performance metric linked to the function of each respective sub-network. The performance metric could be dependent on power-area limitations, memory structures, memory access, time constants, biasing, technology restrictions, resilience, a level of accepted mismatch, and network or physical artifacts.

The neurosynaptic core control element 304 is configured to receive a spike input 306, possibly from a previous layer of input neurons, to send the presynaptic input spike 301 to the row spike decoder 302, and to send the control signals 303 to the presynaptic integrators 303. Further, the neurosynaptic core control element 304 is configured to receive and subsequently transmit a neuron spike output signal 325 from the neuron decoder element 321. Additionally, the neurosynaptic core control element 304 is configured to control both the neuron control element 323 and the neuron decoder element 321. Finally, the neurosynaptic core control element is configurable by a configuration signal 305.

The neuron control element 323 is configured to control the plurality 320 of output neurons 322 through a neuron control signal 324. The neuron decoder element 321 is configured to generate a neuron spike output signal 325 based on at least one spatio-temporal spike train output signal 326, generated by an output neuron 322 based on a synaptic output current 315.

The neuro-synaptic core disclosed in the present invention can thus be organized as repeating arrays of synaptic circuits and neuron units, where each unit can form a cell assembly. The system can incorporate the presence of electronic synapses at the junctions of the array. The periphery of the array can include rows of the synaptic circuits which mimic the action of the soma and axon hillock of biological neurons.

Further, each neuro-synaptic core in the array can have a local router, which communicates to the routers of other cores within a dedicated real-time reconfigurable network-on-chip. A classifier can e.g. be assumed to have a set of output neurons (one for each class) each of which fires an event (spike) according to its firing probability distribution.

Next, presynaptic integration circuits according to the invention will be described.

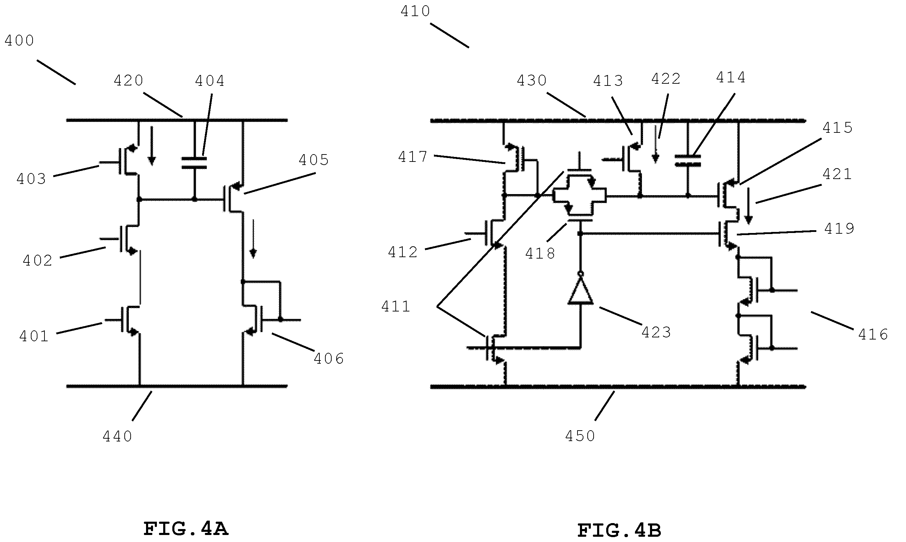

FIG. 4A shows a presynaptic integration circuit 400 according to an exemplary embodiment of a presynaptic integrator 213, 313, comprising a positive voltage supply 420 (also called a drain with voltage *V_{DD}*), a negative voltage supply 440 (also called a source with voltage *V_{SS}*), a capacitor 404, several field effect transistors (FETs), in particular an input FET 401, a leakage FET 403, an output FET 405, and a current mirror 406. The presynaptic integrator 213, 313 operates in the sub-threshold region and offers a low area and linear filtering properties. The presynaptic integrator 213, 313 translates fast presynaptic pulse signals 204, 307 into (long-lasting) synaptic input signals 214, 314. The synaptic input signals may, for example, be shaped like an exponentially decreasing spike (while preserving AMPA-like receptor temporal dynamics). The presynaptic integrator 213, 313 offers the possibility of multiplexing time spikes originating from different neurons, and provides tunable gain independent from the (tunable) time constant.

In this embodiment, the presynaptic pulse signal 204, 307 from the row spike decoder 213, 302 forms the gate-source voltage over the input FET 401. When the gate-source voltage is positive, corresponding to a spike in the presynaptic pulse signal, the input FET 401 turns on, enabling a drain-source current to flow.

Some embodiments may further include a control FET 402, configured to control the temporal dynamic of the synaptic input signal 214, 314 based on a control signal which is the gate-source voltage over the control FET 402. In this embodiment, the control signal is the control signal 203, 303 from the row spike decoder 202 or neurosynaptic core control element 304. When the gate-source voltage is e.g. positive, the control FET 402 turns on, enabling a drain-source current to flow.

The capacitor 404 is connected to input FET 401 and possibly to control FET 402 such that when both input FET 401 and control FET 402 are turned on, a closed circuit is formed, connecting the positive voltage supply 420 to the negative voltage supply 440 through the capacitor 404, such that the capacitor 404 accumulates charge until the connection ends.

If the capacitor 404 has accumulated charge, the output FET 405 turns on, as its gate-source voltage is equal to the charge accumulated by the capacitor 404. When the output FET 405 is turned on, a drain-source current flow is enabled from the positive voltage supply 420 to the negative voltage supply 440, through the output FET 405 and the current mirror 406. The output FET 405 may be configured to operate in its sub-threshold region, such that if the charge on capacitor 404 is decreasing linearly, the drain-source current over the output FET 405 decreases exponentially. In some embodiments, the output FET 405 operates in its sub-threshold region, and, hence, offers an exponential relationship between its gate-source voltage and its source-drain current. Consequently, a linear decrease in the charge on the capacitor 404 is converted to an exponential decay in the drain-source current

The leakage FET 403 is configured to discharge the capacitor 404 if it is turned on. Due to the constant current through leakage FET 403, the charge accumulated by the capacitor 404 decreases linearly In some embodiments, the leakage FET 403 is controlled by a time constant, the time constant determining the gate-source voltage of the leakage FET 403. The time constant may be chosen such that e.g. AMPA, NDMA, GABA_{A} or GABA_{B} temporal dynamics are realised.

If a current flows through the current mirror 406, a voltage signal is generated proportional to the strength of said current. In this embodiment, the synaptic input signal 214, 314 generated by the presynaptic integrator 213, 313 is this voltage signal. In effect, the current flowing through current mirror 406 is replicated as a voltage signal. Alternatively, or in addition, the current mirror 406 may be a cascode current mirror such that the synaptic input signal 214, 314 comprises two voltage signals, for reduced variation and increased accuracy of current replication. Namely, the cascode implementation improves the output drive strength, by improving impedance.

FIG. 4B shows a presynaptic integration circuit 410 according to another exemplary embodiment of a presynaptic integrator 213, 313, comprising a positive voltage supply 430, a negative voltage supply 450, a capacitor 414, several field effect transistors (FETs), in particular input FETs 411, a control FET 412 a leakage FET 413, an output FET 415, a mirror FET 417 and a cascode current mirror 416. To make the amount of charge accumulated by the capacitor independent of the capacitance value of capacitor 414 (which can vary up to 20% due to manufacturing variability), the circuit in Fig. 4B is employed. Hence, the circuit no longer depends on the duration a spike in the presynaptic pulse signal 204, 307, as long as it is long enough to stabilize the charge on capacitor 414. This embodiment further includes an output control element, comprising an output control FET 419, a current control FET 418 and an inverter 423.

In this embodiment, the presynaptic pulse signal 204, 307 is the gate-source voltage over the input FETs 411. If the gate-source voltage over input FETs 411 goes high when an input pulse is applied, a current starts to flow, through control FET 412, charging capacitor 414 to the diode voltage of mirror FET 417. It is important to note that gate-source voltage pulse on input FETS 411 needs to be long enough in order for the amount of charge accumulated by the capacitor 414 to reach a constant value.

The control FET 412 is configured to control the temporal dynamic of the synaptic input signal 214, 314 based on the control signal 203, 303. In this embodiment, the control signal 203, 303 is the gate-source voltage over the control FET 402. When the gate-source voltage is positive, the control FET 412 turns on, enabling a drain-source current to flow. In this embodiment, the control signal 203, 303 is configured to regulate the accumulation of charge by the capacitor, such that the amount of charge accumulated by the capacitor is independent of a duration of a spike in the spatio-temporal spike train and the capacitance value of the capacitor, and to regulate the temporal shape and maximum amplitude of the synaptic input signal by controlling the maximum charge on the capacitor. In some embodiments, control FET 412 is a constant current source.

The capacitor 414 is connected to input FETs 411 and control FET 412 such that when both input FETs 411 and control FET 412 are turned on, a closed circuit is formed, connecting the positive voltage supply 430 to the negative voltage supply 450 through the capacitor 414, such that the capacitor 414 accumulates charge until the connection ends.

If the capacitor 414 has accumulated charge, the output FET 415 turns on, as its gate-source voltage is equal to the charge accumulated by the capacitor 414. When the presynaptic pulse signal 204, 307 goes low, the output is enabled; as leakage FET 413 discharges capacitor 414 over time, the drain-source current over output FET 415 will decrease accordingly When both the output FET 415 and the output control FET 419 are turned on, a drain-source current flow is enabled from the positive voltage supply 430 to the negative voltage supply 450, through the output FET 415, the output control FET 419 and the cascode current mirror 416. The output FET 415 may be configured to operate in its sub-threshold region, such that if the charge on capacitor 414 is decreasing linearly, the drain-source current over the output FET 415 decreases exponentially.

The output stage can employ a cascode current mirror 416 for reduced variation and increased accuracy of the current replication. If a current flows through the cascode current mirror 416, two voltage signals are generated proportional to the strength of said current. In this embodiment, the synaptic input signal 214, 314 generated by the presynaptic integrator 213, 313 thus comprises two voltage signals. In effect, the current flowing through cascode current mirror 416 is replicated as two voltage signals. Alternatively, the cascode current mirror 416 may be a regular current mirror producing one voltage signal instead as was seen in the embodiment of FIG. 4A.

The output control element comprising the inverter 423, the output control FET 419 and current control FET 418, is configured to regulate the flow of an output current. Arrow 421 denotes the direction of the output current over the drain-source of output FET 415. However, this current only flows if both the output FET 415 and output control FET 419 are turned on. The inverter 423 is connected to an input FET 411, such that a positive voltage is generated at its output if the presynaptic input signal 204, 307 is negative, and a negative voltage is generated at the output of inverter 423 if the presynaptic input signal 204, 307 is positive. As a consequence, the output control FET 419 only turns on if the presynaptic input signal is negative, that is, when the presynaptic input signal is not spiking. Output current flow over FETs 415 and 419 is thus only possible after a spike in the spatio-temporal spike train has ended. Additionally, the current control FET 418 is only turned on when the presynaptic pulse signal 204, 307 is spiking. As a consequence, discharging of the capacitor 414 by the drain-source current over either of FETs 418 and 411 is not possible after a spike has ended, making sure that the discharging of capacitor 414 is controlled by the leakage FET 413.

The leakage FET 413 is configured to discharge the capacitor 414 through its drain-source current (current direction indicated by arrow 422), if it is turned on. When the presynaptic pulse signal 204, 307 goes low and the charge circuit is closed, capacitor 414 discharges with a constant current through leakage FET 413. In some embodiments, the leakage FET 413 is controlled by a time constant, the time constant determining the gate-source voltage of the leakage FET 413. The time constant may be chosen such that AMPA, NDMA, GABA_{A} or GABA_{B} temporal dynamics are realised.

The mirror FET 417 is coupled to the output FET 415, such that the mirror FET 417 and output FET 415 together form a current mirror, ensuring that the drain-source current over the output FET 415 is identical to the drain-source current over the mirror FET 417. Therefore the voltage induced by the capacitor within the pre-integration circuit does not matter anymore for the functioning of the pre-integration circuit.

Next, weight application circuits according to the invention will be described.

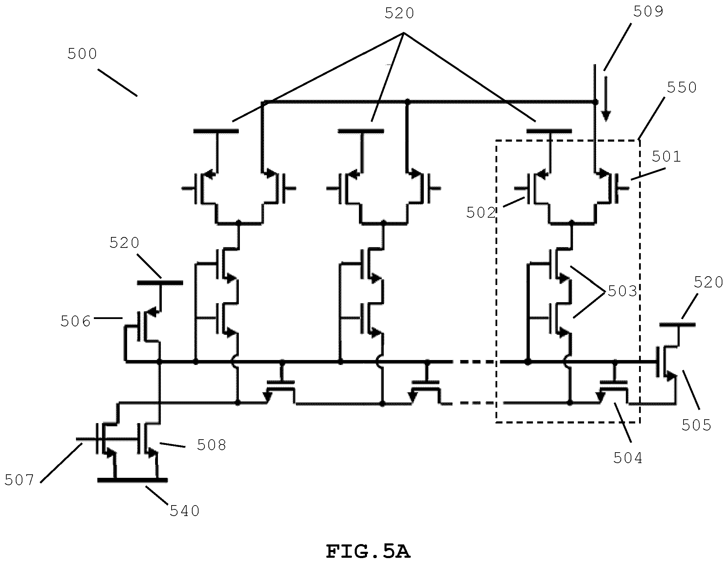

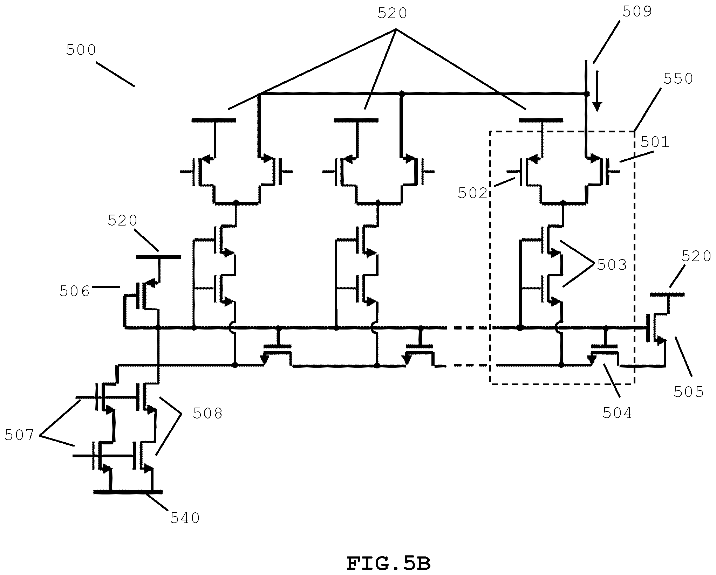

The weight application (multiplication) circuit of Fig. 2 and Fig. 3 is fully distributed and performs the typical synaptic function, connecting the input and output neurons and applying a stored weight. The linearity of the multiplier should be preserved in order to not-degrade learning. The digitally stored weights are transformed to an analog domain through a current-steering D/A converter based on an R-2R architecture, which is shown in Figs. 5A and 5B. The weight application element may apply a factor ranging from zero to one on its input current, attenuating it, and sending the selected portion of the input current to its output.

To minimize sensitivity for weight-errors, it is advantageous to have a small transconductance. Since the design is based on a current-steering D/A conversion, the outputs of multiple weight application elements can be summed straightforwardly

FIG. 5A shows a weight application circuit 500 according to an exemplary embodiment of a weight application element 211, 311. In order to not clutter the image, only some elements have a reference numeral attached to them, and repeated elements are only shown a limited number of times. The weight application circuit 500 comprises a positive voltage supply 520, a negative voltage supply 540, a first synaptic input receiver 507, a second synaptic input receiver 508, an output terminal 509, and a ladder of output selection elements 550, each comprising dual resistance FETs 503, a single resistance FET 504, a positive output FET 501 and a negative output FET 502. FET 505 and FET 506 can also be connected to the positive voltage supply 520.

The synaptic input receivers 507 and 508 are configured to receive a synaptic input signal 214, 314 in the form of a gate-source voltage. With reference to Fig. 4A, the synaptic input signal 214, 314 may be provided by output current mirror 406. The gate-source voltages over synaptic input receivers 507, 508 enable current flow through the rest of the weight application circuit 500, particularly along the ladder of output selection elements 550 to the output terminal 509.

The output selection elements 550 are connected sequentially, such that the current flowing through synaptic input receiver 507 is distributed among the output selection elements 550. Each of the output selection elements 550 comprises a single resistance transistor 504 and dual resistance transistors 503, which are positioned such that the current from the synaptic input receiver 507 is divided by two for each output selection element 550 it passes. Thus, the first output selection element 550 receives half of the synaptic input current, the second output selection element 550 receives a fourth, the third output selection element 550 receives an eighth, and so on. The more output selection elements 550 are included, the more accuracy is attainable in weight application.

Each of the output selection elements 550 comprises a positive output FET 501 and a negative output FET 502. The gate-source voltages over these FETs are determined by the digitally stored weight values, stored in the weight storage elements 212. The weight values are stored as bits, with the amount of bits equal to the amount of output control elements 550. Each bit of the stored weight value determines the setting of an output control element, such that either the positive output FET 501 or the negative output FET 502 is turned on. If the positive output FET 501 is turned on, the portion of the synaptic input current that is allocated to the corresponding output selection element is connected to the output terminal 509. If the negative output FET 502 is turned on, the selected portion of the synaptic input current does not contribute to the synaptic output current. As such, a weight application based on a stored binary weight value is realized.

FIG. 5B shows a weight application circuit 500 according to another exemplary embodiment of a weight application element 211, 311. In this circuit, the synaptic input receivers 507, 508 each comprise two field effect transistors, configured to receive the synaptic input signal 214, 314 in the form of two gate-source voltages. With reference to Fig. 5B, the synaptic input signal 214, 314 may be provided by output cascode current mirror 416.

Next, a polarity selection circuit according to the invention will be described.

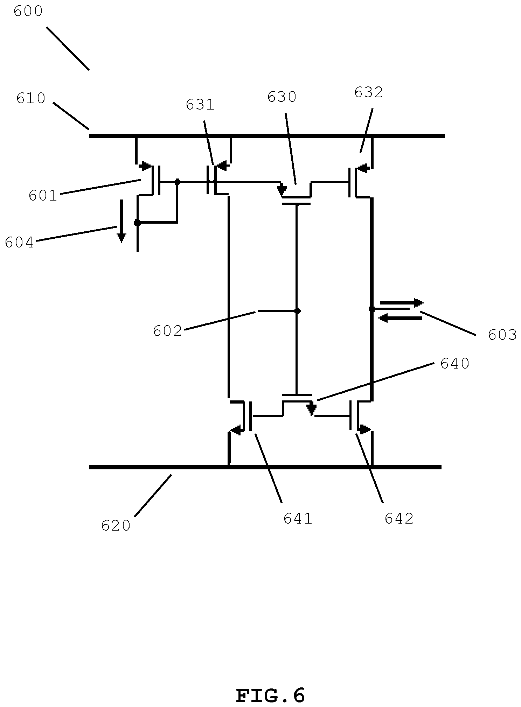

FIG. 6 shows a polarity selection circuit 600 according to an exemplary embodiment of the invention, comprising a polarity selection The polarity of the output of a weight application element 211, 311 may be configurated to generate inhibitory spikes, corresponding to the behaviour of GABA receptors. The polarity selection circuit 600 employs a sourcing current mirror 632 sourcing current and a sinking current mirror 642 sinking current. The polarity selection circuit further comprises a positive voltage supply 610, a negative voltage supply 620, a polarity output element 603, a first passage FET 631, a second passage FET 641, a sourcing selection FET 630, a sinking selection FET 640, and a polarity input element 601 configured to receive the synaptic output current 215, 315. The direction of the synaptic output current 215, 315 is indicated by arrow 604. Depending on whether the voltage applied to the polarity selection terminal 602 is set high or low, the sourcing current mirror or sinking current mirror is enabled, corresponding to an excitatory or inhibitory synapse, respectively.

The polarity input element 601 is configured to receive the synaptic output current as a drain-source current, and to translate this current to a gate-source voltage. This gate-source voltage is applied to the gate terminal of either the sourcing current mirror 632 or the sourcing current mirror 642.

The passage FETs 631 and 632 are configured to pass the signal received by the polarity input element 601 to the sinking current mirror, if applicable. If a voltage is applied to the gate of the first passage FET 631, a drain-source current starts to flow. This drain source current determines the drain-source current flowing through the second passage FET 641, which determines the gate-source voltage of the second passage FET 641. This gate-source voltage applied to passage FET 641 may then be applied to the sinking current mirror 642, if the sinking selection FET 640 is turned on. The gate-source voltage over the second passage FET 641 will be identical to the gate-source voltage generated by polarity input element 601.

If either a high or a low voltage is applied to polarity selection terminal 602, either the sourcing selection FET 630 is turned on, or the sinking selection FET 640 is turned on.

If the sourcing selection FET 630 is turned on, a drain-source current over the sourcing selection FET 630 is enabled. As a consequence, the gate-source voltage over the polarity input element 601 is also applied to sourcing current mirror 632, turning the sourcing current mirror 632 on. If the sourcing current mirror 632 is turned on, a current starts to flow from the positive voltage supply 610 to the polarity output element 603, which is identical to the synaptic output current received by the polarity input element 601.

If the sinking selection FET 640 is turned on, a drain-source current over the sinking selection FET 640 is enabled. As a consequence, the gate-source voltage over the polarity input element 601 is also applied to sinking current mirror 642, turning the sinking current mirror 642 on. If the sinking current mirror 642 is turned on, a current starts to flow from the polarity output element 603 to the negative voltage supply 620. Thus, a current equal to the inverted synaptic input current received by the polarity input element 601 flows through the polarity output element 603.

Through the use of a polarity selection circuit, the spiking neural network can be implemented, without loss of generality, as a conductance-based integrate and fire model, which is one possible implementation of a generalized integrate and fire model.

Next, possible signal patterns achievable by the invention will be described.

A spiking neural network according to the present invention can display a wide range of pattern activity, for example full synchrony, cluster or asynchronous states, depending on the excitatory/inhibitory network interaction conditions, heterogeneities in the input patterns, and the spatio-temporal dynamics implemented in the presynaptic integrators.

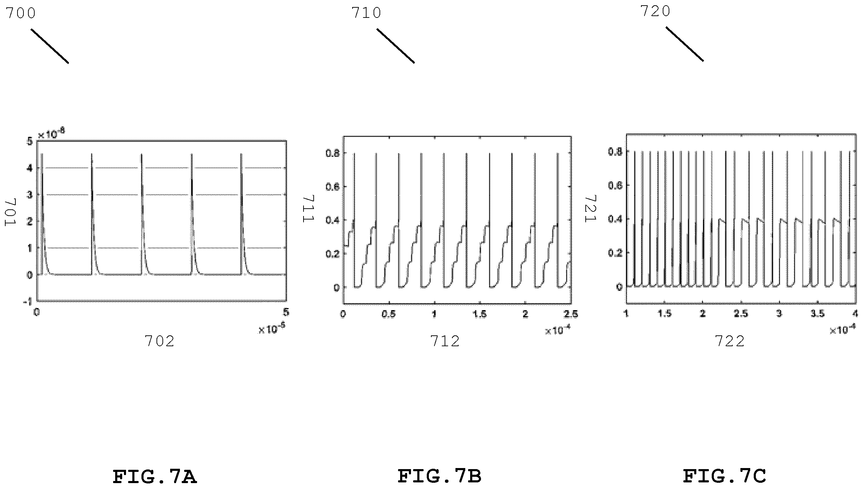

FIG. 7A shows a graph 700 plotting excitatory synaptic output current (or excitatory postsynaptic current, i.e. synaptic EPSC current) 701 in Amperes as a function of time 702 in seconds, wherein the excitatory synaptic output current 701 is one exemplary embodiment of a synaptic output current 215, 315.

FIGS 7B and 7C show graphs 710, 720 plotting voltage of a spatio-temporal spike train 711, 721 in Volts as a function of time 712, 722 in seconds wherein the spatio-temporal spike train is an exemplary embodiment of a spatio-temporal spike train 204, 307. In particular, FIG. 7B shows that accumulating charge on the membrane of a neuron (node) leads to spike generation. In Fig. 7C, non-linear spiking behaviour and frequency adaptability is shown.

The current invention can be implemented on an integrated circuit, in particular on a microcontroller integrated circuit. For example, the cores in the core array can form a network-on-chip on the microcontroller integrated circuit. The network-on-chip improves the scalability and the power efficiency of the microcontroller integrated circuit. The network-on-chip can be real-time reconfigurable, or statically defined during the production phase. When the network-on-chip is real-time reconfigurable, the settings of the cores in the core array and their interconnect structure settings can be altered. This alteration can be done based for example on changing input or output of the microcontroller integrated circuit, different demands on accuracy or stability of the classification, the evolution of the network based on its learning rules and a change in communication protocols.

The current invention provides implementation of distributed multi-component hardware structure that enables optimal area and power design of synaptic processing functions. It can realize increase in synaptic structure dimensionality by allowing per-component optimization of individual signal processing characteristics and functions within the spiking neural network.

The current invention provides implementation of an area- and power-efficient presynaptic adaptation mechanism that is robust against array inhomogeneities, where only a single spike integrator (instead of n) for every input neuron is required.

The current invention provides implementation of presynaptic adaptation (presynaptic integration and current generation) mechanism that minimize effects of synaptic capacitance variation. Furthermore, it provides implementation of an efficient mechanism for transformation of a digitally stored weights to an analog domain by applying a factor ranging on its input current, and sending the selected portion of the input current to its output.

Furthermore, the current invention provides implementation of a mechanism to select between excitatory and inhibitory output in a synaptic element. It provides implementation of synaptic elements capable of generating complex dynamics that can be extended towards particular functionality, such as the change in temporal characteristic, to perform time-dependent computations.

Two or more of the above embodiments may be combined in any appropriate manner.

The following clauses detail a number of aspects and/or features of the present invention.

### Clauses:

Clause 1. A spiking neural network (100) comprising a plurality of presynaptic integrators (209), a plurality of weight application elements (210), and a plurality of output neurons (220);
wherein each of the plurality of presynaptic integrators (213) is adapted to receive a presynaptic pulse signal (204) which incites accumulation of charge within the presynaptic integrator, and generate a synaptic input signal (214) based on the accumulated charge such that the synaptic input signal has a pre-determined temporal dynamic;
wherein a first group of weight application elements (211) of the plurality of weight application elements (210) is connected to receive the synaptic input signal (214) from a first one of the plurality of presynaptic integrators (213);
wherein each weight application element (211) of the first group of weight application elements is adapted to apply a weight value to the synaptic input signal (214) to generate a synaptic output current (215), wherein the strength of the synaptic output current is a function of the applied weight value; and
wherein each of the plurality of output neurons (222) is connected to receive a synaptic output current (214) from a second group of weight application elements of the plurality of weight application elements, and generate a spatio-temporal spike train output signal (223) based on the received one or more synaptic output currents.
Clause 2. The spiking neural network of clause 1, wherein each of the weight application elements comprises a weight application circuit comprising:
   a synaptic input receiver configured to receive the synaptic input signal from the presynaptic integrator and to generate a synaptic input current based on the synaptic input signal;
   a weight storage element configured to store the weight value;
   a modification element configured to apply the weight value stored in the weight storage element to the synaptic input current to generate the synaptic output current;
   wherein the weight value is preferably stored in digital form and transformed to an analog domain through a current-steering digital-to-analog converter,
   wherein the current-steering digital-to-analog converter is preferably based on an R-2R architecture, and
   wherein current-steering digital-to-analog converter preferably applies a predetermined factor to attenuate the synaptic input current, and generates the synaptic output current based on the attenuated synaptic input current.
Clause 3. The spiking neural network of clause 2, wherein the weight value stored in the weight storage element is adjustable, preferably wherein the weight value stored in the weight storage element is adjusted based on a learning rule.
Clause 4. The spiking neural network of any of the preceding clauses, wherein the network further comprises a row spike decoder configured to supply the presynaptic pulse signal on the basis of a presynaptic input spike such that the presynaptic pulse signal is allocated to the presynaptic integrator on the basis of the configuration of the spiking neural network.
Clause 5. The spiking neural network of any of the preceding clauses, wherein the spiking neural network comprises input neurons which generate the presynaptic pulse signal, and wherein the presynaptic integrator multiplexes time spikes originating from different input neurons.
Clause 6. The spiking neural network of any of the preceding clauses, wherein the pre-determined temporal dynamic of the synaptic input signal that the presynaptic integrator generates is an AMPA, NMDA, GABA_{A}, or GABA_{B} temporal dynamic.
Clause 7. The spiking neural network of any of the preceding clauses, wherein the presynaptic integrator generates a tunable gain independent from a tunable time constant, wherein the time constant determines a leakage current which decumulates the accumulated charge within the presynaptic integrator and characterizes the temporal dynamic of the synaptic input signal of the presynaptic integrator.
Clause 8. The spiking neural network of any of the preceding clauses, wherein the presynaptic integrator is configurable by a control signal, preferably wherein the control signal controls the temporal shape of the synaptic input signal.
Clause 9. The spiking neural network of any of the preceding clauses, wherein the output neurons are controlled by a neuron control signal such as to control the neuron dynamics.
Clause 10. The spiking neural network of any of the preceding clauses, wherein the spiking neural network comprises a plurality of first groups of weight application elements,
   wherein each one of the weight application elements in each first group of weight application elements is connected to receive the same synaptic input signal from a respective presynaptic integrator, and
   wherein each first group of weight application elements is connected to receive a synaptic input signal from a different one of the plurality of presynaptic integrators.
Clause 11. The spiking neural network of clause 10, wherein the spiking neural network comprises a plurality of input neurons, wherein a respective one of the input neurons is connected to provide a presynaptic pulse signal to a respective one of the presynaptic integrators for providing a synaptic input signal for a respective first group of weight application elements.
Clause 12. The spiking neural network of any of the preceding clauses, wherein the spiking neural network comprises a plurality of second groups of weight application elements, wherein each second group of weight application elements is connected to provide synaptic output signals to a different one of the plurality of output neurons.
Clause 13. The spiking neural network of any of the preceding clauses, wherein the spiking neural network displays a range of pattern activity in use, comprising full synchrony, cluster or asynchronous states, heterogeneities in the input patterns, neurosynaptic elements spatio-temporal dynamics, non-linear spiking behaviour and/or frequency adaptability.
Clause 14. A presynaptic integration circuit configured to generate a synaptic input current for input to a plurality of weight application elements, comprising:
   an input element configured to receive a presynaptic pulse signal, preferably a presynaptic pulse voltage, preferably wherein the presynaptic pulse signal is a spatio-temporal spike train;
   a capacitor configured to accumulate charge in response to the presynaptic pulse signal;
   a leakage element configured to discharge at least a portion of the charge accumulated by the capacitor; and
   an output element configured to generate the synaptic input signal based on the charge accumulated by the capacitor for supply to the plurality of weight application elements.
Clause 15. The presynaptic integration circuit of clause 14, further comprising a control element adapted to control the temporal dynamic of the synaptic input signal, wherein the control element is configured to:
   receive a control signal, preferably a control voltage;
   regulate accumulation of charge by the capacitor based on the control signal; and
   regulate the maximum amplitude of the synaptic input signal by controlling the maximum charge on the capacitor.
Clause 16. A presynaptic integration circuit configured to generate a synaptic input signal for subsequent weight application, comprising:
   an input element configured to receive a presynaptic pulse signal, preferably a presynaptic pulse voltage, wherein the presynaptic pulse signal is a spatio-temporal spike train;
   a capacitor configured to accumulate charge based on a spike in the spatio-temporal spike train;
   a leakage element configured to discharge at least a portion of the charge accumulated by the capacitor;
   an output element configured to generate the synaptic input signal based on the charge accumulated by the capacitor;
   an output control element configured to control the generation of the synaptic input signal performed by the output element based on the presynaptic pulse signal, such that the generation of the synaptic input signal is controlled by the spatio-temporal spike train,
   preferably wherein the synaptic input signal is not generated during a spike of the spatio-temporal spike train; and
      a control element, configured to:
      receive a control signal, preferably a control voltage,
      regulate accumulation of charge by the capacitor such that the amount of charge accumulated by the capacitor is independent of a duration of a spike in the spatio-temporal spike train and the capacitance value of the capacitor, preferably manufacturing variation in the capacitor; and
      regulate the temporal shape and maximum amplitude of the synaptic input signal by controlling the maximum charge on the capacitor.
Clause 17. The presynaptic integration circuit of clause 16, wherein the output control element comprises a field-effect transistor and an inverter, the inverter configured to apply a gate-source voltage of the field effect transistor of the output control element based on the presynaptic input signal, preferably wherein the gate-source voltage is applied when the presynaptic input signal is not spiking, and wherein the synaptic input signal is generated by the drain-source current over the field-effect transistor of the output control element.
Clause 18. The presynaptic integration circuit of any of clauses 14-17, wherein the leakage element is controlled by a time constant, preferably wherein the time constant characterizes AMPA, NMDA, GABA_{A} or GABA_{B} temporal dynamics.
Clause 19. The presynaptic integration circuit of clause 18, wherein the leakage element comprises a field-effect transistor, wherein the time constant is the gate-source voltage of the field-effect transistor of the leakage element, and wherein the capacitor is discharged by the drain-source current of the field-effect transistor of the leakage element.
Clause 20. The presynaptic integration circuit of any of clause 14-19, wherein the input element comprises a field-effect transistor, wherein the presynaptic pulse signal is the gate-source voltage of the field-effect transistor of the input element, and wherein the drain-source current over the field-effect transistor of the input element charges up the capacitor.
Clause 21. The presynaptic integration circuit of any of clauses 14-20, wherein the output element comprises a field-effect transistor, wherein the charge accumulated by the capacitor generates the gate-source voltage of the field-effect transistor of the output element, and wherein the drain-source current over the field-effect transistor of the output element generates the synaptic input signal.
Clause 22. The presynaptic integration circuit of any of clauses 14-20, wherein the control element comprises a field-effect transistor, wherein the control signal is the gate-source voltage of the field-effect transistor of the control element, and wherein the capacitor is charged by the drain-source current over the field-effect transistor of the control element.
Clause 23. The presynaptic integration circuit of any of clause 14-22, wherein the output element further comprises an output current mirror which is configured to generate the synaptic input signal in the voltage domain; or
   an output cascode current mirror which is configured to generate the synaptic input signal in the voltage domain, the resulting synaptic input signal comprising two voltage signals.
Clause 24. The presynaptic integration circuit of any of clauses 14-23, wherein the synaptic input signal decreases exponentially when the capacitor is being discharged.
Clause 25. A polarity selection circuit configured to replicate or invert a synaptic output current, comprising:
   a polarity input element configured to receive the synaptic output current;
   a polarity selection terminal configured to select a sourcing or sinking current mirror on the basis of a polarity input signal;
   wherein the sourcing current mirror is configured to replicate the synaptic output current; and
   wherein the sinking current mirror is configured to invert the synaptic output current; a polarity output element which generates a polarity output current on the basis of the replicated or inverted synaptic output current.
Clause 26. The spiking neural network of any of clauses 1-13, wherein each of the weight application elements further comprises a polarity selection element, the polarity selection element comprising the polarity selection circuit of clause 26, such that the synaptic output signal from any of clauses 1-13 is used by the polarity selection circuit to generate the polarity output current, preferably wherein the input neuron receives the polarity output current and wherein the replicated synaptic output current corresponds to an excitatory synaptic output signal and the inverted synaptic output current corresponds to an inhibitory synaptic output signal.
Clause 27. The spiking neural network of clause 26, wherein the presynaptic integrator comprises the presynaptic integration circuit of any of clauses 14-24.
Clause 28. A method of presynaptic integration and weight application for a spiking neural network, the spiking neural network comprising a plurality of presynaptic integrators (209), a plurality of weight application elements (210), and a plurality of output neurons (220); wherein the method comprises:
   receiving, by each of the plurality of presynaptic integrators (213), a presynaptic pulse signal (204) which incites accumulation of charge with the presynaptic integrator;
   generating, by each of the plurality of presynaptic integrators (213), a synaptic input signal (214) based on the accumulated charge such that the synaptic input signal has a pre-determined temporal dynamic;
   receiving, by a first group of weight application elements (211) of the plurality of weight application elements (210), the synaptic input signal (214) from a first one of the plurality of presynaptic integrators (213);
   applying a weight value to the synaptic input signal (214) by each weight application element (211) of the first group of weight application elements to generate a synaptic output current (215), wherein the strength of the synaptic output current is a function of the applied weight value; and
   receiving, by each of the plurality of output neurons (222), a synaptic output current (214) from a second group of weight application elements of the plurality of weight application elements, and generating a spatio-temporal spike train output signal (223) based on the received one or more synaptic output currents.
Clause 29. The method of presynaptic integration and weight application of clause 28, wherein each of the weight application elements comprises a weight application circuit, adapted to:
   receiving the synaptic input signal from the presynaptic integrator and to generate a synaptic input current based on the synaptic input signal;
   storing the weight values;
   applying the stored weight value to the synaptic input current to generate the synaptic output current.
Clause 30. The method of presynaptic integration and weight application of any one of clauses 28-29, wherein the presynaptic integrator generates a tunable gain independent from a tunable time constant, wherein the time constant determines a leakage current which decumulates the accumulated charge within the presynaptic integrator and characterizes the temporal dynamic of the synaptic input signal of the presynaptic integrator.
Clause 31. The method of presynaptic integration and weight application of any one of clauses 28-30, wherein the spiking neural network comprises a plurality of first groups of weight application elements;
   wherein each one of the weight application elements in each first group of weight application elements is connected to receive the same synaptic input signal from a respective presynaptic integrator;
   and wherein each first group of weight application elements is connected to receive a synaptic input signal from a different one of the plurality of presynaptic integrators.
Clause 32. The method of presynaptic integration and weight application of clause 31, wherein the spiking neural network comprises a plurality of input neurons, wherein a respective one of the input neurons is connected to provide a presynaptic pulse signal to a respective one of the presynaptic integrators for providing a synaptic input signal for a respective first group of weight application elements.
Clause 33. A method of presynaptic integration for a spiking neural network, comprising:
   providing a presynaptic integration circuit configured to generate a synaptic input current for input to a plurality of weight application elements;
   receiving a presynaptic pulse signal, preferably a presynaptic pulse voltage, preferably wherein the presynaptic pulse signal is a spatio-temporal spike train;
   accumulating charge in response to the presynaptic pulse signal;
   discharging at least a portion of the charge accumulated through a leakage element; and
   generating the synaptic input signal based on the charge accumulated for supply to the plurality of weight application elements.
Clause 34. A method of presynaptic integration for a spiking neural network, comprising:
   providing a presynaptic integration circuit configured to generate a synaptic input signal for subsequent weight application;
   receiving a presynaptic pulse signal, preferably a presynaptic pulse voltage, wherein the presynaptic pulse signal is a spatio-temporal spike train;
   accumulating charge by a capacitor based on a spike in the spatio-temporal spike train;
   discharging at least a portion of the charge accumulated by the capacitor through a leakage element;
   generating the synaptic input signal based on the charge accumulated by the capacitor;
   controlling the generation of the synaptic input signal performed by the output element based on the presynaptic pulse signal, such that the generation of the synaptic input signal is controlled by the spatio-temporal spike train, preferably wherein the synaptic input signal is not generated during a spike of the spatio-temporal spike train; and
   providing a control element, configured to:
      receive a control signal, preferably a control voltage,
      regulate the accumulation of charge such that the amount of charge accumulated by the capacitor is independent of a duration of a spike in the spatio-temporal spike train and the capacitance value of the capacitor, preferably manufacturing variation in the capacitor; and
      regulate the temporal shape and maximum amplitude of the synaptic input signal by controlling the maximum charge on the capacitor.
Clause 35. A method for polarity selection, comprising:
   providing polarity selection circuit configured to replicate or invert a synaptic output current;
   receiving the synaptic output current;
   selecting a sourcing or sinking current mirror on the basis of a polarity input signal;
   replicating the synaptic output current and/or inverting the synaptic output current;
   generating a polarity output current on the basis of the replicated or inverted synaptic output current.
Clause 36. A method of classifying input signals using the spiking neural network of any one of clauses 1-13, 26-27.

## Claims

1. A polarity selection circuit (600) configured to replicate or invert a synaptic output current (215), comprising:
a polarity input element (601) configured to receive the synaptic output current;
a polarity selection terminal (602) configured to select a sourcing or sinking current mirror on the basis of a polarity input signal;
wherein the sourcing current mirror (632) is configured to replicate the synaptic output current; and
wherein the sinking current mirror (642) is configured to invert the synaptic output current;
a polarity output element (603) which generates a polarity output current on the basis of the replicated or inverted synaptic output current.

2. The polarity selection circuit of claim 1, wherein the polarity selection circuit is arranged to enable the sourcing current mirror or sinking current mirror.

3. The polarity selection circuit of claim 1 or claim 2, wherein the polarity input element (601) is configured to receive the synaptic output current as a drain-source current, and to translate this current to a gate-source voltage to be applied to the gate terminal of either the sourcing current mirror (632) or the sinking current mirror (642).

4. The polarity selection circuit of any of claim 1-3, the polarity selection circuit further comprising:
a sourcing selection field-effect transistor, FET (630), and;
a sinking selection FET (640);
wherein if, compared to a reference voltage, a high voltage is applied to the polarity selection terminal (602), the sourcing selection FET (630) is arranged to be turned on, and/or if, compared to the reference voltage, a low voltage is applied to the polarity selection terminal (602), the sinking selection FET (640) is arranged to be turned on.

5. The polarity selection circuit of claim 4, the polarity selection circuit further comprising a positive voltage supply (610), wherein the sourcing selection FET (630) is arranged to, when turned on, turn on the sourcing current mirror, preferably wherein the sourcing current mirror, when turned on, is arranged to allow a current to flow from the positive voltage supply (610) to the polarity output element (603) which is identical to the synaptic output current received by the polarity input element (601).

6. The polarity selection circuit of claim 4 or claim 5, further comprising a negative voltage supply (620), wherein the sinking selection FET (640) is arranged to, when turned on, turn on the sinking current mirror, preferably wherein the sinking current mirror, when turned on, is arranged to allow a current to flow from the polarity output element (603) to the negative voltage supply (620) which is identical to the inverted synaptic input current received by the polarity input element (601).

7. A weight application element (211) for a spiking neural network,
the weight application element comprising a polarity selection element (601) according to any one of claims 1-6;
the weight application element (211) being arranged to receive a synaptic input signal and apply a weight value to the synaptic input signal to generate a synaptic output current; wherein the strength of the synaptic output current is a function of the applied weight value, the synaptic output current being used by the polarity selection circuit to generate the polarity output current;
wherein the replicated synaptic output current corresponds to an excitatory synaptic output current and the inverted synaptic output current corresponds to an inhibitory synaptic output current.

8. A spiking neural network comprising:
a plurality of presynaptic integrators (209);
a plurality of weight application elements (210), wherein at least one weight application element (211) of the plurality of weight application elements (211) is a weight application element according to claim 7; and
a plurality of output neurons (220);
wherein each of the plurality of presynaptic integrators (213) is adapted to receive a presynaptic pulse signal (204) which incites accumulation of charge within the presynaptic integrator, and generate a synaptic input signal (214) based on the accumulated charge such that the synaptic input signal has a pre-determined temporal dynamic;
wherein a first group of weight application elements (211) of the plurality of weight application elements (210) is connected to receive the synaptic input signal (214) from a first one of the plurality of presynaptic integrators (213);
wherein each weight application element (211) of the first group of weight application elements is adapted to apply a weight value to the synaptic input signal (214) to generate a synaptic output current (215), wherein the strength of the synaptic output current is a function of the applied weight value; and
wherein each of the plurality of output neurons (222) is connected to receive a synaptic output current (214) from a second group of weight application elements of the plurality of weight application elements, and generate a spatio-temporal spike train output signal (223) based on the received one or more synaptic output currents.

9. The spiking neural network of claim 8, further comprising a plurality of input neurons;
wherein the synaptic output current from any of claims 1-6 is used by the polarity selection circuit to generate the polarity output current; and
wherein the at least one input neuron of the plurality of input neurons receives the polarity output current; and
preferably wherein the replicated synaptic output current corresponds to an excitatory synaptic output current and the inverted synaptic output current corresponds to an inhibitory synaptic output current.

10. A method of polarity selection, the method comprising:
providing a polarity selection circuit configured to replicate or invert a synaptic output current (215);
receiving the synaptic output current;
selecting a sourcing current mirror (632) or sinking current mirror (642) on the basis of a polarity input signal;
replicating the synaptic output current and/or inverting the synaptic output current;
generating a polarity output current on the basis of the replicated or inverted synaptic output current.

11. The method of polarity selection of claim 10, the method further comprising enabling the sourcing current mirror or sinking current mirror.

12. The method of polarity selection claim 10 or claim 11, the method further comprising receiving the synaptic output current as a drain-source current, translating this current to a gate-source voltage, and applying this voltage to the gate terminal of either the sourcing current mirror (632) or the sinking current mirror (642).

13. The method of polarity selection of any of claims 10-12, the method further comprising:
if, compared to a reference voltage, the polarity input signal comprises a high voltage, turning on a sourcing selection FET (630), and/or if, compared to a reference voltage, the polarity input signal comprises a low voltage, turning on a sinking selection FET (640).

14. The method of polarity selection of claim 13, the method further comprising, if the sourcing selection FET (630) is turned on, turning on, by the sourcing selection FET (630), the sourcing current mirror, preferably further comprising allowing a current to flow from a positive voltage supply (610) to a polarity output element (603) which is identical to the synaptic output current received by the polarity input element (601).

15. The method of polarity selection of claim 13 or claim 14, further comprising:
if the sinking selection FET (640) is turned on, turning on, by the sinking selection FET (640), the sinking current mirror, preferably further comprising allowing a current to flow from a polarity output element (603) to a negative voltage supply (620) which is identical to the synaptic output current received by the polarity input element (601).

16. A method of weight application for a spiking neural network, the method comprising:
receiving, by a weight application element (211), a synaptic input signal;
applying, by the weight application element (211), a weight value to the synaptic input signal to generate a synaptic output current;
using the synaptic output current to generate the polarity output current, wherein the polarity output current is generated according to the method of any of claims 10-15, wherein the replicated synaptic output current corresponds to an excitatory synaptic output current and the inverted synaptic output current corresponds to an inhibitory synaptic output current.

17. A method of weight application for a spiking neural network, the spiking neural network comprising a plurality of presynaptic integrators (209), a plurality of weight application elements (210), and a plurality of output neurons (220); the method comprising:
receiving, by each of the plurality of presynaptic integrators (213), a presynaptic pulse signal (204) which incites accumulation of charge with the presynaptic integrator;
generating, by each of the plurality of presynaptic integrators (213), a synaptic input signal (214) based on the accumulated charge such that the synaptic input signal has a pre-determined temporal dynamic;
receiving, by a first group of weight application elements (211) of the plurality of weight application elements (210), the synaptic input signal (214) from a first one of the plurality of presynaptic integrators (213);
applying a weight value to the synaptic input signal (214) by each weight application element (211) of the first group of weight application elements to generate a synaptic output current (215), wherein at least one of the weight application elements of the first group of weight application elements applies a weight value to the synaptic input signal according to the method of claim 16; and
receiving, by each of the plurality of output neurons (222), a synaptic output current (214) from a second group of weight application elements of the plurality of weight application elements, and generating a spatio-temporal spike train output signal (223) based on the received one or more synaptic output currents.

18. A method of weight application for a spiking neural network of claim 17, further comprising using the synaptic output current to generate the polarity output current according to the method of any of claims 10-15, preferably further comprising receiving, preferably further comprising receiving, by at least one input neuron of a plurality of input neurons comprised by the spiking neural network, the polarity output current, more preferably wherein the replicated synaptic output current corresponds to an excitatory synaptic output current and the inverted synaptic output current corresponds to an inhibitory synaptic output current.
